# EUROPEAN PATENT APPLICATION

(11) **EP 4 422 279 A1**
(43) Date of publication of application: **28.08.2024**
(21) Application number: 22882894.3
(22) Date of filing: 19.10.2022
(51) Int. Cl.: H04W 36/08, H04W 8/14

(54) **CELL RESELECTION METHOD AND APPARATUS, AND RELATED DEVICE**

(30) Priority: 21.10.2021 CN 202111228031
(71) Applicant: Vivo Mobile Communication Co., Ltd., Dongguan, Guangdong 523863 (CN)
(72) Inventor: PAN, Xiang, Dongguan, Guangdong 523863 (CN); QIN, Fei, Dongguan, Guangdong 523863 (CN); YANG, Xiaodong, Dongguan, Guangdong 523863 (CN); KIMBA DIT ADAMOU, Boubacar, Dongguan, Guangdong 523863 (CN)
(74) Representative: Murgitroyd & Company
(86) International application number: PCT/CN2022/126135
(87) International publication number: WO 2023/066289

(57) **Abstract**

This application discloses a cell reselection method and apparatus, and a related device, and pertains to the field of communications technologies. The method includes: inputting, by a terminal, target information into an artificial intelligence (AI) model, to obtain an output result, where the target information includes information about a camped cell of the terminal and information about a neighbor cell of the terminal, and the output result includes information about the terminal to be reselected to the neighbor cell; and determining, by the terminal based on the output result, whether to be reselected to the neighbor cell.

## Description

### CROSS-REFERENCE TO RELATED APPLICATION

This application claims priority to Chinese Patent Application No. 202111228031.9 filed in China on October 21, 2021, which is incorporated herein by reference in its entirety.

### TECHNICAL FIELD

This application pertains to the field of communications technologies, and in particular, to a cell reselection method and apparatus, and a related device.

### BACKGROUND

Being in an inactive state or idle state, a terminal may select a specific cell to camp, and when the terminal needs to enter a connected state, the terminal may initiate access in the camped cell. To balance the random access load between different frequency channel numbers, the network needs to enable cells to be evenly distributed when the terminal selects a cell to camp. In addition, to obtain better performance in a serving cell, the terminal needs to select a cell with better signal quality when selecting a cell to camp.

In the existing cell reselection, after the terminal establishes a radio resource control (Radio Resource Control, RRC) connection in the camped cell and enters the connected state, the terminal may need to switch or redirect to another cell in a short time, resulting in a decline in communications performance.

### SUMMARY

Embodiments of this application provide a cell reselection method and apparatus, and a related device, to solve the problem of a decline in communications performance caused by improper selection of the camped cell in the existing cell reselection manner.

According to a first aspect, a cell reselection method is provided, including:
inputting, by a terminal, target information into an artificial intelligence (AI) model, to obtain an output result, where the target information includes information about a camped cell of the terminal and information about a neighbor cell of the terminal, and the output result includes information about the terminal to be reselected to the neighbor cell; and
determining, by the terminal based on the output result, whether to be reselected to the neighbor cell.

According to a second aspect, a cell reselection method is provided, including:
sending, by a first network device, first artificial intelligence (AI) model information, where the first Al model information is information about an Al model used for cell reselection.

According to a third aspect, a cell reselection method is provided, including:
sending, by a second network device, information about a neighbor cell for cell reselection, where the information about the neighbor cell includes at least one of the following:
a cell identifier of the second network device;
a service type supported by the second network device;
radio resource information supported by the second network device;
a slice type supported by the second network device;
a normal direction of an antenna of the second network device;
load information of the second network device;
a radio signal measurement result for the second network device; and
historical information generated by the second network device in a process of serving the terminal, where
the second network device is a network device corresponding to the neighbor cell.

According to a fourth aspect, a cell reselection apparatus is provided, including:
an obtaining module, configured to input target information into an artificial intelligence (AI) model, to obtain an output result, where the target information includes information about a camped cell of the terminal and information about a neighbor cell of the terminal, and the output result includes information about the terminal to be reselected to the neighbor cell; and
a determining module, configured to determine, based on the output result, whether to be reselected to the neighbor cell.

According to a fifth aspect, a cell reselection apparatus is provided, including:
a sending module, configured to send first artificial intelligence (AI) model information, where the first Al model information is information about an Al model used for cell reselection.

According to a sixth aspect, a cell reselection apparatus is provided, including:
a sending module, configured to send information about a neighbor cell for cell reselection, where the information about the neighbor cell includes at least one of the following:
a cell identifier of the second network device;
a service type supported by the second network device;
radio resource information supported by the second network device;
a slice type supported by the second network device;
a normal direction of an antenna of the second network device;
load information of the second network device;
a radio signal measurement result for the second network device; and
historical information generated by the second network device in a process of serving the terminal, where
the second network device is a network device corresponding to the neighbor cell.

According to a seventh aspect, a terminal is provided, including a processor, a memory, and a program or an instruction stored in the memory and executable on the processor, where when the program or the instruction is executed by the processor, steps of the cell reselection method according to the first aspect are implemented.

According to an eighth aspect, a network device is provided. The network device includes a processor, a memory, and a program or an instruction stored in the memory and executable on the processor, and the program or the instruction is executed by the processor to implement steps of the cell reselection method according to the second aspect or the third aspect.

According to a ninth aspect, a readable storage medium is provided. The readable storage medium stores a program or an instruction, and when the program or the instruction is executed by a processor, steps of the cell reselection method according to the first aspect, the second aspect, or the third aspect are implemented.

According to a tenth aspect, a chip is provided. The chip includes a processor and a communications interface, the communications interface is coupled to the processor, and the processor is configured to run a program or an instruction of a network device to implement the cell reselection method according to the first aspect, the second aspect, or the third aspect.

According to an eleventh aspect, a communications device is provided, and is configured to perform steps of the method according to the first aspect, or steps of the method according to the second aspect, or steps of the method according to the third aspect.

In the embodiments of this application, the terminal inputs target information into an artificial intelligence (AI) model, to obtain an output result, where the target information includes information about a camped cell of the terminal and information about a neighbor cell of the terminal, and the output result includes information about the terminal to be reselected to the neighbor cell; and the terminal determines, based on the output result, whether to be reselected to the neighbor cell. Based on the Al model, the terminal can be reselected to a proper cell, which avoids the terminal from being switched or redirected to another cell in a short time due to improper cell selection, and improves communications performance.

### BRIEF DESCRIPTION OF DRAWINGS

FIG. 1 is a structural diagram of a network system according to an embodiment of this application;
FIG. 2 is a flowchart of a cell reselection method according to an embodiment of this application;
FIG. 3 is another flowchart of a cell reselection method according to an embodiment of this application;
FIG. 4 is still another flowchart of a cell reselection method according to an embodiment of this application;
FIG. 5 is a structural diagram of a cell reselection apparatus according to an embodiment of this application;
FIG. 6 is another structural diagram of a cell reselection apparatus according to an embodiment of this application;
FIG. 7 is still another structural diagram of a cell reselection apparatus according to an embodiment of this application;
FIG. 8 is a structural diagram of a communications device according to an embodiment of this application;
FIG. 9 is a structural diagram of a terminal according to an embodiment of this application; and
FIG. 10 is a structural diagram of a network side device according to an embodiment of this application.

### DESCRIPTION OF EMBODIMENTS

The following clearly describes technical solutions in embodiments of this application with reference to accompanying drawings in the embodiments of this application. Apparently, the described embodiments are some but not all of the embodiments of this application. All other embodiments obtained by a person of ordinary skill in the art based on the embodiments of this application shall fall within the protection scope of this application.

The terms "first", "second", and the like in this specification and claims of this application are used to distinguish between similar objects instead of describing a specific order or sequence. It should be understood that, data termed in such a way is interchangeable in proper circumstances, so that the embodiments of this application can be implemented in an order other than the order illustrated or described herein. Objects classified by "first" and "second" are usually of a same type, and the number of objects is not limited. For example, there may be one or more first objects. In addition, in the description and the claims, "and/or" represents at least one of connected objects, and a character "/" generally represents an "or" relationship between associated objects. In this application, 'transmission' means signal transfer, not signal sending in a narrow sense.

It should be noted that, the technologies described in the embodiments of this application are not limited to a Long Term Evolution (Long Term Evolution, LTE)/LTE-Advanced (LTE-Advanced, LTE-A) system, and can also be used in other wireless communications systems such as Code Division Multiple Access (Code Division Multiple Access, CDMA), Time Division Multiple Access (Time Division Multiple Access, TDMA), Frequency Division Multiple Access (Frequency Division Multiple Access, FDMA), Orthogonal Frequency Division Multiple Access (Orthogonal Frequency Division Multiple Access, OFDMA), Single-carrier Frequency-Division Multiple Access (Single-carrier Frequency-Division Multiple Access, SC-FDMA), and another system. The terms "system" and "network" in the embodiments of this application may be used interchangeably. The technologies described can be applied to both the systems and the radio technologies mentioned above as well as to other systems and radio technologies. However, a new radio (New Radio, NR) system is described in the following description for illustrative purposes, and the NR terminology is used in most of the following description, although these technologies can also be applied to applications other than the NR system application, such as the 6^{th} generation (6^{th} Generation, 6G) communications system.

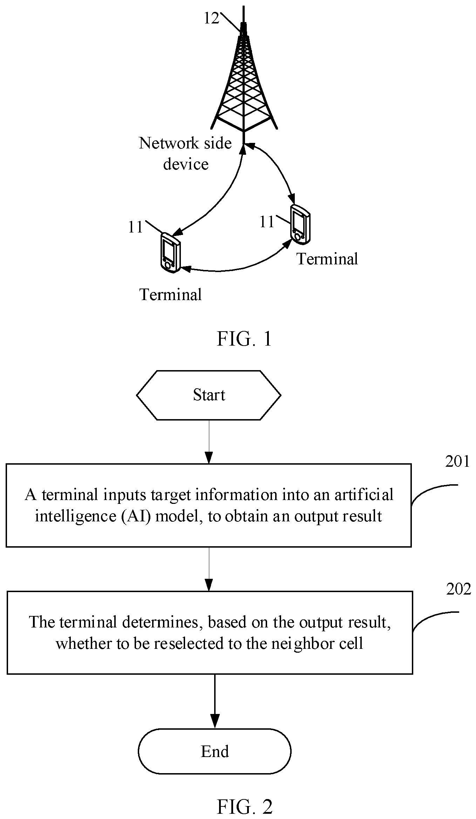

FIG. 1 is a structural diagram of a wireless communications system to which embodiments of this application can be applied. The wireless communications system includes a terminal 11 and a network side device 12 (also referred to as a network device). The terminal 11 may also be referred to as a terminal device or user equipment (User Equipment, UE). The terminal 11 may be a terminal side device such as a mobile phone, a tablet personal computer (Tablet Computer), a laptop computer (Laptop Computer) or a notebook computer, a personal digital assistant (Personal Digital Assistant, PDA), a palmtop computer, a netbook, an ultra-mobile personal computer (ultra-mobile personal computer, UMPC), a mobile internet device (Mobile Internet Device, MID), a wearable device (Wearable Device), vehicle user equipment (VUE), or pedestrian user equipment (PUE). The wearable device includes a bracelet, a headset, glasses, and the like. It should be noted that a specific type of the terminal 11 is not limited in the embodiments of this application. The network side device 12 may be a base station or a core network. The base station may be referred to as a NodeB, an evolved NodeB, an access point, a base transceiver station (Base Transceiver Station, BTS), a radio base station, a radio transceiver, a basic service set (Basic Service Set, BSS), an extended service set (Extended Service Set, ESS), a home NodeB, a home evolved NodeB, a WLAN access point, a Wi-Fi node, a transmitting receiving point (Transmitting Receiving Point, TRP), or another suitable term in the field provided that a same technical effect is achieved. The base station is not limited to a specific technical term. It should be noted that, in the embodiments of this application, only a base station in an NR system is used as an example, but a specific type of the base station is not limited.

The following describes in detail the cell reselection method provided in the embodiments of this application through specific embodiments and application scenarios thereof with reference to the accompanying drawings.

Referring to FIG. 2, FIG. 2 is a flowchart of a cell reselection method according to an embodiment of this application, and the cell reselection method includes the following steps.

Step 201. A terminal inputs target information into an artificial intelligence (AI) model, to obtain an output result, where the target information includes information about a camped cell of the terminal and information about a neighbor cell of the terminal, and the output result includes information about the terminal to be reselected to the neighbor cell.

The neighbor cell is a cell adjacent to a current cell that the terminal accesses. The terminal may obtain first artificial intelligence (Artificial Intelligence, AI) model information for cell reselection from a first network device, and determine an AI model based on the first AI model information, where the terminal may be in an inactive state or an idle state.

The first network device may be a network device where a cell sending the connection release or the camped cell is located, or the first network device may be an operation administration and maintenance (Operation Administration and Maintenance, OAM) device or a network data analytics function (Network Data Analytics Function, NWDAF) device.

The terminal may receive the last message sent by the first network device before entering the inactive state or the idle state, and the last message carries the first model information, or the terminal may receive the first AI model information sent by the first network device through a broadcast message. The first AI model information is carried in a last message received before the terminal enters an inactive state or an idle state, or the first AI model information is carried in a message received in a case that the terminal is in the inactive state or the idle state.

To be specific, the first AI model information may be carried in the last message received before the terminal enters the inactive state or the idle state, or the first AI model information is carried in the message received in a case that the terminal is in the inactive state or the idle state.

Step 202. The terminal determines, based on the output result, whether to be reselected to the neighbor cell.

An inference result of the AI model (namely, the output result) can be used to assist the terminal in determining whether to be reselected to the neighbor cell.

In this embodiment, the terminal inputs target information into an artificial intelligence (AI) model, to obtain an output result, where the target information includes information about a camped cell of the terminal and information about a neighbor cell of the terminal, and the output result includes information about the terminal to be reselected to the neighbor cell; and the terminal determines, based on the output result, whether to be reselected to the neighbor cell. Based on the AI model, the terminal can be reselected to a proper cell, which avoids the terminal from being switched or redirected to another cell in a short time due to improper cell selection, and improves communications performance.

According to the foregoing description, the information about the camped cell includes at least one of the following:
a normal direction of an antenna of a first network device;
load information of the first network device; and
a radio signal measurement result for the first network device, where the first network device is a network device corresponding to the camped cell.

The radio signal measurement result for the first network device includes at least one of the following:
reference signal receiving power (RSRP) of a reference signal of the first network device; and
reference signal receiving quality (Reference Signal Receiving Quality, RSRQ) of the reference signal of the first network device.

According to the foregoing description, the information about the neighbor cell includes at least one of the following:
a cell identifier of a second network device;
a service type supported by the second network device;
radio resource information supported by the second network device;
a slice type supported by the second network device;
a normal direction of an antenna of the second network device;
load information of the second network device;
a radio signal measurement result for the second network device; and
historical information generated by the second network device in a process of serving the terminal, where
the second network device is a network device corresponding to the neighbor cell.

According to the foregoing description, the radio signal measurement result for the second network device includes at least one of the following:
RSRP of a reference signal of the second network device; and
RSRQ of the reference signal of the second network device.

According to the foregoing description, the historical information includes at least one of the following:
a historical switching report of the terminal on the second network device;
a historical radio link failure report of the terminal on the second network device;
a random access report of the terminal on the second network device; and
a historical service state of the terminal on the second network device.

According to the foregoing description, the radio resource information supported by the second network device includes at least one of the following:
a bandwidth supported by the second network device;
whether the second network device supports carrier aggregation;
a carrier aggregation combination supported by the second network device;
whether the second network device supports dual connectivity; and
a dual connectivity combination supported by the second network device.

In an embodiment of this application, the load information includes at least one of the following:
a physical resource block (Physical Resource Block, PRB) utilization rate;
the number of radio resource control (Radio Resource Control, RRC) connections, that is, the number of terminals in the connected state;
the number of stored sessions of an inactive terminal; and
time stamp information, that is, a future time corresponding to load forecasting, such as a system frame or a slot.

In an embodiment of this application, the target information further includes information about the terminal, and the information about the terminal includes at least one of the following:
state information of the terminal;
a service requirement type prediction parameter of the terminal; and
a historical service cell identifier list of the terminal, where the historical service cell identifier can be represented by a cell identifier such as physical cell identification (Physical Cell Identification, PCI) or a cell global identifier (Cell Global Identifier, CGI), where
the state information of the terminal includes at least one of the following:
   location information of the terminal, for example, a global positioning system (Global Positioning System, GPS) measurement result; and
   mobility information of the terminal, such as a moving direction and a moving speed.

According to the foregoing description, the AI model is determined based on first AI model information, and the first AI model information is used to indicate at least one of the following:
(1) an AI model identifier, where the identifier uniquely identifies a single AI model in the terminal (hereinafter also referred to as a terminal device);
(2) AI model state information, indicating whether the AI model is in an active state during configuration;
(3) an activation condition for the AI model;
(4) operation cycle information for the AI model, that is, how often the AI model is executed after being activated;
(5) a validity period of the AI model, where the terminal device starts a timer after receiving the AI model (an initial value of the timer is the validity period of the AI model), and when the timer duration exceeds the validity period of the AI model, the AI model is invalid, and optionally, the terminal device can release the AI model after the validity period;
(6) a valid area for the AI model, where after the terminal device receives the first AI model information, the AI model is valid when the terminal device is in the valid area; and if the terminal device moves outside the valid area, the configuration is invalid, and optionally, after moving outside the valid area, the terminal device can release the AI model;
(7) a time-frequency resource for requesting the AI model, that is, the terminal device can request the AI model through random access in this time-frequency resource (for example, when the AI model is invalid, a new AI model is requested);
(8) AI model structure information, including a specific type of the AI model (such as Gaussian process, support vector machine, various neural network methods, and the like) and a specific structure of the model (such as the number of layers of neural network, the number of neurons in each layer, activation function, and the like);
(9) AI model parameter information, that is, a superparameter configuration of the AI model;
(10) AI model data processing manner information, that is, the preprocessing of the input parameter before being input into the AI model, including but not limited to: normalization, up-sampling, down-sampling, and the like;
(11) first description information related to an AI model input parameter, where the first description information includes a default-able identifier of each input parameter. For example, each input parameter is associated with the default-able identifier, and if the default-able identifier indicates that the input parameter can be default, when the input parameter cannot be obtained, the parameter may not be input;
(12) a default value for the AI model input parameter, that is, when the terminal device cannot obtain the required input value, the default value can be used as the input; and
(13) second description information related to an AI model output parameter, where the second description information can describe the output parameter, for example, when an output value of the first output parameter is A, it indicates first meaning; and when the output value of the first output parameter is B, it indicates second meaning.

According to the foregoing description, the activation condition for the AI model includes at least one of the following that:
reference signal receiving power (Reference Signal Receiving Power, RSRP) of a reference signal of a first network device is less than or equal to a first threshold; and
RSRP of a reference signal of a second network device is greater than or equal to a second threshold.

It should be noted that after the AI model is activated, the terminal no longer uses the original method for cell reselection, but uses the cell reselection method provided in this application, that is, cell reselection is performed based on the first AI model information.

According to the foregoing description, the operation cycle information for the AI model includes at least one of the following:
an operation cycle in which the terminal operates the AI model, where the operation cycle can be a fixed value T, that is, the terminal device should operate the AI model according to a fixed cycle;
a first parameter related to a radio signal measurement value of the terminal, where the first parameter is used to determine the operation cycle of the AI model, that is, an interval at which the terminal device operates the AI model is related to a reference signal obtained by the terminal device in current measurement, for example, the lower the RSRP of the reference signal of the first network device measured by the terminal device is, the shorter the cycle is; and
a second parameter related to a moving speed of the terminal, where the second parameter is used to determine the operation cycle of the AI model, that is, an interval at which the terminal device operates the AI model is related to a reference signal obtained by the terminal device in current measurement, for example, the faster the moving speed of the terminal device is, the shorter the cycle is.

According to the foregoing description, the default value for the AI model input parameter includes at least one of the following:
a cell identifier default value of the second network device;
a state information default value of the terminal;
a radio signal measurement result default value;
a historical information default value;
a network load information default value;
a service type default value supported by the second network device;
a slice type default value supported by the second network device;
a radio resource information default value supported by the second network device;
a normal direction of an antenna default value of the first network device;
a normal direction of an antenna default value of the second network device; and
a service requirement type prediction parameter default value of the terminal.

In an implementation, the output result includes indication information, and the indication information is used to indicate whether to be reselected to the neighbor cell. Further, the output result further includes at least one of the following:
a confidence coefficient for being reselected to the neighbor cell;
a time for being reselected to the neighbor cell; and
a cell identifier of the neighbor cell.

In a case that the confidence coefficient is greater than a confidence threshold, the output result is: being reselected to the neighbor cell. The confidence threshold can be configured by the first network device or determined according to the protocol.

The AI model input parameter includes at least one of the following:
a cell identifier of the second network device, where the cell identifier of the second network device can be represented by a cell identifier such as physical cell identification (Physical Cell Identification, PCI) or a cell global identifier (Cell Global Identifier, CGI);
state information of the terminal, that is, the state information of the terminal device;
a radio signal measurement result;
historical information;
load information;
a service type supported by the second network device;
radio resource information supported by the second network device;
a slice type supported by the second network device;
a normal direction of an antenna of the first network device;
a normal direction of an antenna of the second network device; and
a service requirement type prediction parameter of the terminal.

In this application, the terminal can obtain the first AI model information, the network load information of the first network device, the network load information of the second network device, and the service type, slice type, and radio resource information supported by the second network device in the following manners:
a last message received before the terminal enters a disconnected state (namely, the inactive state or the idle state), such as an RRC release (Release) message; and
a message received by a terminal in a disconnected state, such as a broadcast message.

In another implementation, the reselection method further includes: in a case of determining, based on the validity period of the AI model, that the AI model is invalid, performing, by the terminal, one of the following operations:
receiving second AI model information through broadcasting;
obtaining the second AI model information through a random access request, where the resource for the random access request can be a time-frequency resource for requesting the AI model in the first AI model information; and
performing cell reselection in a preset manner, where the preset manner can be understood as a manner of performing cell reselection without the AI model information.

In an implementation, the cell reselection method further includes:
in a case that the terminal determines to be reselected to the neighbor cell, initiating, by the terminal, a random access request to the neighbor cell, where
the random access request carries a random access report, and the random access report includes at least one of the following:
   a cell reselection type identifier, where the identifier can be used to indicate that cell reselection is realized based on the first AI model information;
   an AI model input parameter and a parameter value for the AI model input parameter;
   an AI model identifier;
   a default list of the AI model input parameter, where the default list may include a default input parameter among AI model input parameters; and
   a default value list of default values for the AI model input parameter, where the default value list may include an input parameter which is the default value among AI model input parameters.

The random access report is sent to the second network device to feed back an AI model using record to the network device, which can be used for iterative optimization of the AI model.

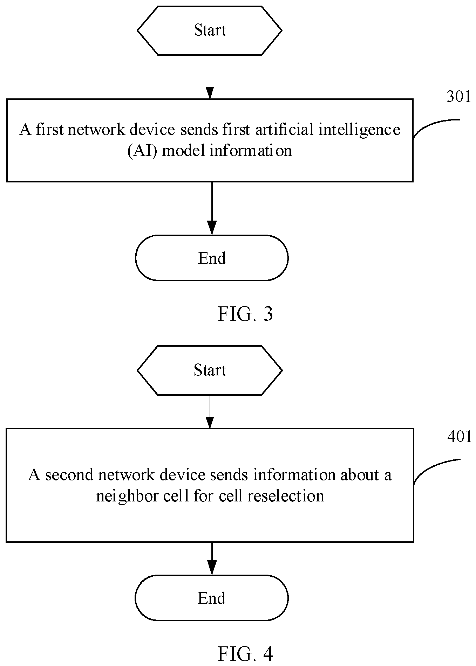

Referring to FIG. 3, FIG. 3 is another flowchart of a cell reselection method according to an embodiment of this application, and the cell reselection method includes the following steps.

Step 301. A first network device sends first artificial intelligence (AI) model information, where the first AI model information is information about an AI model used for cell reselection.

In this embodiment, the first network device sends the first AI model information to the terminal to assist the terminal in cell reselection, so that the terminal can be reselected to a proper cell, which avoids the terminal from being switched or redirected to another cell in a short time due to improper cell selection, and improves communications performance.

According to the foregoing description, the first AI model information is used to indicate at least one of the following:
an AI model identifier;
AI model state information;
an activation condition for the AI model;
operation cycle information for the AI model;
a validity period of the AI model;
a valid area for the AI model;
a time-frequency resource for requesting the AI model;
AI model structure information;
AI model parameter information;
AI model data processing manner information;
first description information related to an AI model input parameter, where the first description information includes a default-able identifier of each input parameter;
a default value for the AI model input parameter; and
second description information related to an AI model output parameter.

According to the foregoing description, the activation condition for the AI model includes at least one of the following that:
reference signal receiving power (RSRP) of a reference signal of a first network device is less than or equal to a first threshold; and
RSRP of a reference signal of a second network device is greater than or equal to a second threshold.

According to the foregoing description, the operation cycle information for the AI model includes at least one of the following:
an operation cycle in which the terminal operates the AI model;
a first parameter related to a radio signal measurement value of the terminal, where the first parameter is used to determine the operation cycle of the AI model; and
a second parameter related to a moving speed of the terminal, where the second parameter is used to determine the operation cycle of the AI model.

According to the foregoing description, the default value for the AI model input parameter includes at least one of the following:
a cell identifier default value of the second network device;
a state information default value of the terminal;
a radio signal measurement result default value;
a historical information default value;
a network load information default value;
a service type default value supported by the second network device;
a slice type default value supported by the second network device;
a radio resource information default value supported by the second network device;
a normal direction of an antenna default value of the first network device;
a normal direction of an antenna default value of the second network device; and
a service requirement type prediction parameter default value of the terminal.

According to the foregoing description, the first AI model information is carried in a last message sent by the first network device before the terminal enters an inactive state or an idle state, or the first AI model information is carried in a broadcast message that is sent by the first network device and that is received in a case that the terminal is in the inactive state or the idle state.

In an implementation, the method further includes:
sending, by the first network device, load information to the terminal.

The load information includes at least one of the following:
a physical resource block (PRB) utilization rate;
the number of radio resource control (RRC) connections;
the number of stored sessions of an inactive terminal; and
time stamp information.

Referring to FIG. 4, FIG. 4 is another flowchart of a cell reselection method according to an embodiment of this application, and the cell reselection method includes the following steps.

Step 401. A second network device sends information about a neighbor cell for cell reselection, where the information about the neighbor cell includes at least one of the following:
a cell identifier of the second network device;
a service type supported by the second network device;
radio resource information supported by the second network device;
a slice type supported by the second network device;
a normal direction of an antenna of the second network device;
load information of the second network device;
a radio signal measurement result for the second network device; and
historical information generated by the second network device in a process of serving the terminal, where
the second network device is a network device corresponding to the neighbor cell.

In this embodiment, the second network device sends the information about the neighbor cell to the terminal, to assist the terminal in cell reselection, so that the terminal can be reselected to a proper cell, which avoids the terminal from being switched or redirected to another cell in a short time due to improper cell selection, and improves communications performance.

The load information includes at least one of the following:
a physical resource block (PRB) utilization rate;
the number of radio resource control (RRC) connections;
the number of stored sessions of an inactive terminal; and
time stamp information.

According to the foregoing description, the radio resource information supported by the second network device includes at least one of the following:
a bandwidth supported by the second network device;
whether the second network device supports carrier aggregation;
a carrier aggregation combination supported by the second network device;
whether the second network device supports dual connectivity; and
a dual connectivity combination supported by the second network device.

The following describes the cell reselection method provided in this application with reference to examples.
1. The terminal receives the first AI model information for cell reselection through an RRC release message or a broadcast message, where the first AI model information can be in an active state or an inactive state.
2. The terminal enters an idle state (RRC_IDLE) or an inactive state (RRC_INACTIVE) after receiving the RRC release message.
3. The terminal monitors a current air interface parameter, and if an activation condition for the AI model is met, model inference is carried out according to a calculated inference cycle. After the AI model is activated, a conventional method (such as R criterion) is no longer used for cell reselection, where:
   the activation condition for the AI model can be that RSRP of a current cell or neighbor cell exceeds a threshold;
   the inference cycle for the AI model can be related to a measurement result of RSRP and/or a moving speed of the terminal; and
   the AI model has a validity period and a validity range, that is, being only valid in a specific time and area.
4. If the inference result (that is, the output result for the AI model) is to be reselected to another cell at a specific moment, the terminal can be reselected to a new cell at that moment.
5. If the AI model is invalid, the terminal can perform the following items:
   receiving second AI model information through broadcasting;
   obtaining the second AI model information through a random access request; and
   being back to the original manner for cell reselection;
6. If the terminal initiates random access on a new reselected cell and needs to generate a random access report, the report may include at least one of the following:
   a cell reselection type identifier, indicating that cell reselection is realized based on the AI model;
   an AI model input parameter and a parameter value for the AI model input parameter, including an AI model input parameter for determining cell reselection;
   an AI model identifier; and
   an input default value list of the AI model, that is, which AI model input parameters are default values.

Record information can be added to a random access report (RACH report), which can be used for iterative optimization of the AI model.

According to the cell reselection method provided in this application, the terminal in the disconnected state infers based on the AI model sent by the network for cell reselection, which is convenient for the terminal to select a proper cell to camp. In addition, the terminal sends a random access report to the network, which can provide a training input source for the network to train the AI model for AI model iteration.

It should be noted that an execution subject of the cell reselection method according to an embodiment of this application may be a cell reselection apparatus, or a control module for performing the cell reselection method in the cell reselection apparatus.

In the following embodiment, the cell reselection apparatus according to an embodiment of this application is described by using an example in which the cell reselection apparatus performs the cell reselection method.

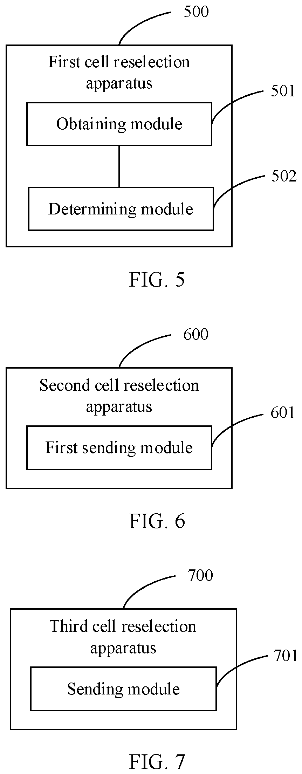

Referring to FIG. 5, FIG. 5 is a structural diagram of a cell reselection apparatus according to an embodiment of this application, and the first cell reselection apparatus 500 includes:
an obtaining module 501, configured to input target information into an artificial intelligence (AI) model, to obtain an output result, where the target information includes information about a camped cell of the terminal and information about a neighbor cell of the terminal, and the output result includes information about the terminal to be reselected to the neighbor cell; and
a determining module 502, configured to determine, based on the output result, whether to be reselected to the neighbor cell.

Optionally, the information about the camped cell includes at least one of the following:
a normal direction of an antenna of a first network device;
load information of the first network device; and
a radio signal measurement result for the first network device, where the first network device is a network device corresponding to the camped cell.

Optionally, the information about the neighbor cell includes at least one of the following:
a cell identifier of a second network device;
a service type supported by the second network device;
radio resource information supported by the second network device;
a slice type supported by the second network device;
a normal direction of an antenna of the second network device;
load information of the second network device;
a radio signal measurement result for the second network device; and
historical information generated by the second network device in a process of serving the terminal, where
the second network device is a network device corresponding to the neighbor cell.

Optionally, the target information further includes information about the terminal, and the information about the terminal includes at least one of the following:
state information of the terminal;
a service requirement type prediction parameter of the terminal; and
a historical service cell identifier list of the terminal.

Optionally, the state information of the terminal includes at least one of the following:
location information of the terminal; and
mobility information of the terminal.

Optionally, the radio signal measurement result for the first network device includes at least one of the following:
reference signal receiving power (RSRP) of a reference signal of the first network device; and
reference signal receiving quality (RSRQ) of the reference signal of the first network device.

Optionally, the radio signal measurement result for the second network device includes at least one of the following:
RSRP of a reference signal of the second network device; and
RSRQ of the reference signal of the second network device.

Optionally, the historical information includes at least one of the following:
a historical switching report of the terminal on the second network device;
a historical radio link failure report of the terminal on the second network device;
a random access report of the terminal on the second network device; and
a historical service state of the terminal on the second network device.

Optionally, the load information includes at least one of the following:
a physical resource block (PRB) utilization rate;
the number of radio resource control (RRC) connections;
the number of stored sessions of an inactive terminal; and
time stamp information.

Optionally, the radio resource information supported by the second network device includes at least one of the following:
a bandwidth supported by the second network device;
whether the second network device supports carrier aggregation;
a carrier aggregation combination supported by the second network device;
whether the second network device supports dual connectivity; and
a dual connectivity combination supported by the second network device.

Optionally, the AI model is determined based on first AI model information, and the first AI model information is used to indicate at least one of the following:
an AI model identifier;
AI model state information;
an activation condition for the AI model;
operation cycle information for the AI model;
a validity period of the AI model;
a valid area for the AI model;
a time-frequency resource for requesting the AI model;
AI model structure information;
AI model parameter information;
AI model data processing manner information;
first description information related to an AI model input parameter, where the first description information includes a default-able identifier of each input parameter;
a default value for the AI model input parameter; and
second description information related to an AI model output parameter.

Optionally, the activation condition for the AI model includes at least one of the following that:
reference signal receiving power (RSRP) of a reference signal of a first network device is less than or equal to a first threshold; and
RSRP of a reference signal of a second network device is greater than or equal to a second threshold.

Optionally, the operation cycle information for the AI model includes at least one of the following:
an operation cycle in which the terminal operates the AI model;
a first parameter related to a radio signal measurement value of the terminal, where the first parameter is used to determine the operation cycle of the AI model; and
a second parameter related to a moving speed of the terminal, where the second parameter is used to determine the operation cycle of the AI model.

Optionally, the output result includes indication information, and the indication information is used to indicate whether to be reselected to the neighbor cell.

Optionally, the output result further includes at least one of the following:
a confidence coefficient for being reselected to the neighbor cell;
a time for being reselected to the neighbor cell; and
a cell identifier of the neighbor cell.

Optionally, in a case that the confidence coefficient is greater than a confidence threshold, the output result is: being reselected to the neighbor cell.

Optionally, the first AI model information is carried in a last message received before the terminal enters an inactive state or an idle state, or the first AI model information is carried in a message received in a case that the terminal is in the inactive state or the idle state.

Optionally, the apparatus further includes an execution module, configured to: in a case of determining, based on the validity period of the AI model, that the AI model is invalid, perform one of the following operations:
receiving second AI model information through broadcasting;
obtaining the second AI model information through a random access request; and
performing cell reselection in a preset manner.

Optionally, the apparatus further includes:
a sending module, configured to: in a case that the terminal determines to be reselected to the neighbor cell, initiate a random access request to the neighbor cell, where
the random access request carries a random access report, and the random access report includes at least one of the following:
   a cell reselection type identifier;
   an AI model input parameter and a parameter value for the AI model input parameter;
   an AI model identifier;
   a default list of the AI model input parameter; and
   a default value list of default values for the AI model input parameter.

The first cell reselection apparatus 500 in this embodiment of this application may be an apparatus, or may be a component, an integrated circuit, or a chip in a terminal.

The first cell reselection apparatus 500 in this embodiment of this application may be an apparatus with an operating system. The operating system may be an Android (Android) operating system, may be an iOS operating system, or may be another possible operating system. This is not specifically limited in this embodiment of this application.

The first cell reselection apparatus 500 provided in this embodiment of this application can implement the processes implemented in the method embodiment of FIG. 2, and a same technical effect can be achieved. To avoid repetition, details are not described herein again.

Referring to FIG. 6, FIG. 6 is a structural diagram of a cell reselection apparatus according to an embodiment of this application, and the second cell reselection apparatus 600 includes:
a first sending module 601, configured to send first artificial intelligence (AI) model information, where the first AI model information is information about an AI model used for cell reselection.

Optionally, the first AI model information is used to indicate at least one of the following:
an AI model identifier;
AI model state information;
an activation condition for the AI model;
operation cycle information for the AI model;
a validity period of the AI model;
a valid area for the AI model;
a time-frequency resource for requesting the AI model;
AI model structure information;
AI model parameter information;
AI model data processing manner information;
first description information related to an AI model input parameter, where the first description information includes a default-able identifier of each input parameter;
a default value for the AI model input parameter; and
second description information related to an AI model output parameter.

Optionally, the activation condition for the AI model includes at least one of the following that:
reference signal receiving power (RSRP) of a reference signal of a first network device is less than or equal to a first threshold; and
RSRP of a reference signal of a second network device is greater than or equal to a second threshold.

Optionally, the operation cycle information for the AI model includes at least one of the following:
an operation cycle in which the terminal operates the AI model;
a first parameter related to a radio signal measurement value of the terminal, where the first parameter is used to determine the operation cycle of the AI model; and
a second parameter related to a moving speed of the terminal, where the second parameter is used to determine the operation cycle of the AI model.

Optionally, the default value for the AI model input parameter includes at least one of the following:
a cell identifier default value of the second network device;
a state information default value of the terminal;
a radio signal measurement result default value;
a historical information default value;
a network load information default value;
a service type default value supported by the second network device;
a slice type default value supported by the second network device;
a radio resource information default value supported by the second network device;
a normal direction of an antenna default value of the first network device;
a normal direction of an antenna default value of the second network device; and
a service requirement type prediction parameter default value of the terminal.

Optionally, the first AI model information is carried in a last message sent by the first network device before the terminal enters an inactive state or an idle state, or the first AI model information is carried in a broadcast message that is sent by the first network device and that is received in a case that the terminal is in the inactive state or the idle state.

Optionally, the apparatus further includes:
a second sending module, configured to send load information to the terminal.

Optionally, the load information includes at least one of the following:
a physical resource block (PRB) utilization rate;
the number of radio resource control (RRC) connections;
the number of stored sessions of an inactive terminal; and
time stamp information.

The second cell reselection apparatus 600 provided in this embodiment of this application can implement the processes implemented in the method embodiment of FIG. 3, and a same technical effect can be achieved. To avoid repetition, details are not described herein again.

Referring to FIG. 7, FIG. 7 is a structural diagram of a cell reselection apparatus according to an embodiment of this application, and the third cell reselection apparatus 700 includes:
a sending module 701, configured to send information about a neighbor cell for cell reselection, where the information about the neighbor cell includes at least one of the following:
a cell identifier of the second network device;
a service type supported by the second network device;
radio resource information supported by the second network device;
a slice type supported by the second network device;
a normal direction of an antenna of the second network device;
load information of the second network device;
a radio signal measurement result for the second network device; and
historical information generated by the second network device in a process of serving the terminal, where
the second network device is a network device corresponding to the neighbor cell.

Optionally, the load information includes at least one of the following:
a physical resource block (PRB) utilization rate;
the number of radio resource control (RRC) connections;
the number of stored sessions of an inactive terminal; and
time stamp information.

Optionally, the radio resource information supported by the second network device includes at least one of the following:
a bandwidth supported by the second network device;
whether the second network device supports carrier aggregation;
a carrier aggregation combination supported by the second network device;
whether the second network device supports dual connectivity; and
a dual connectivity combination supported by the second network device.

Optionally, the apparatus further includes a receiving module, configured to receive a random access request initiated by the terminal, where
the random access request carries a random access report, and the random access report includes at least one of the following:
a cell reselection type identifier;
an AI model input parameter and a parameter value for the AI model input parameter;
an AI model identifier;
a default list of the AI model input parameter; and
a default value list of default values for the AI model input parameter.

The third cell reselection apparatus 700 provided in this embodiment of this application can implement the processes implemented in the method embodiment of FIG. 4, and a same technical effect can be achieved. To avoid repetition, details are not described herein again.

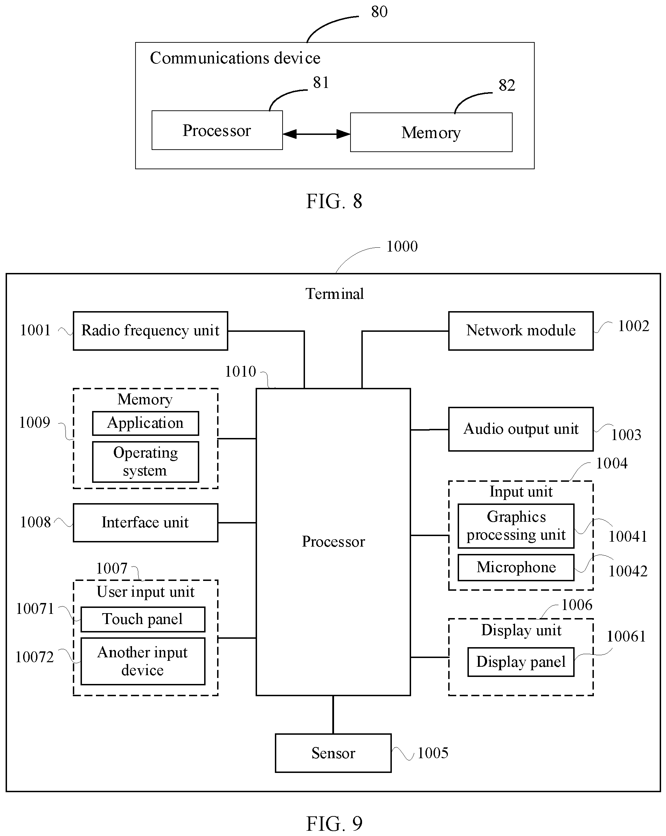

Optionally, as shown in FIG. 8, an embodiment of this application further provides a communications device 80, which includes a processor 81, a memory 82, and a program or an instruction stored in the memory 82 and executable on the processor 81. For example, when the communications device 80 is a terminal, the program or the instruction is executed by the processor 81 to realize the processes of the cell reselection method embodiment shown in FIG. 2, and a same technical effect can be achieved. In a case that the communications device 80 is a network device, when the program or the instruction is executed by the processor 81, the processes of the cell reselection method embodiment shown in FIG. 3 or FIG. 4 can be implemented, and a same technical effect can be achieved.

FIG. 9 is a schematic diagram of a hardware structure of a terminal according to an embodiment of this application.

A terminal 1000 includes but is not limited to components such as a radio frequency unit 1001, a network module 1002, an audio output unit 1003, an input unit 1004, a sensor 1005, a display unit 1006, a user input unit 1007, an interface unit 1008, a memory 1009, and a processor 1010.

A person skilled in the art can understand that the terminal 1000 may further include a power supply (such as a battery) that supplies power to each component. The power supply may be logically connected to the processor 1010 by using a power supply management system, to implement functions such as charging and discharging management, and power consumption management by using the power supply management system. The terminal structure shown in FIG. 9 constitutes no limitation on the terminal, and the terminal may include more or fewer components than those shown in the figure, or combine some components, or have different component arrangements. Details are not described herein.

It should be understood that in this embodiment of this application, the input unit 1004 may include a graphics processing unit (Graphics Processing Unit, GPU) 10041 and a microphone 10042. The graphics processing unit 10041 processes image data of a static picture or a video obtained by an image capture apparatus (for example, a camera) in a video capture mode or an image capture mode. The display unit 1006 may include a display panel 10061, and the display panel 10061 may be configured in a form of a liquid crystal display, an organic light-emitting diode, or the like. The user input unit 1007 includes a touch panel 10071 and another input device 10072. The touch panel 10071 is also referred to as a touchscreen. The touch panel 10071 may include two parts: a touch detection apparatus and a touch controller. The another input device 10072 may include but is not limited to a physical keyboard, a functional button (such as a volume control button or a power on/off button), a trackball, a mouse, and a joystick. Details are not described herein.

In this embodiment of this application, after receiving downlink data from a network side device, the radio frequency unit 1001 sends the downlink data to the processor 1010 for processing, and sends uplink data to the base station. Usually, the radio frequency unit 1001 includes but is not limited to an antenna, at least one amplifier, a transceiver, a coupler, a low noise amplifier, a duplexer, and the like.

The memory 1009 may be configured to store a software program or an instruction and various data. The memory 1009 may mainly include a program or instruction storage area and a data storage area. The program or instruction storage area may store an operating system, an application or an instruction required by at least one function (for example, a sound playing function or an image playing function), and the like. In addition, the memory 1009 may include a high-speed random access memory, and may further include a non-volatile memory. The non-volatile memory may be a read-only memory (Read-Only Memory, ROM), a programmable read-only memory (Programmable ROM, PROM), an erasable programmable read-only memory (Erasable PROM, EPROM), an electrically erasable programmable read-only memory (Electrically EPROM, EEPROM), or a flash memory, for example, at least one disk storage device, a flash memory device, or another non-volatile solid-state storage device.

The processor 1010 may include one or more processing units. Optionally, an application processor and a modem processor may be integrated into the processor 1010. The application processor mainly processes an operating system, a user interface, an application, an instruction, or the like. The modem processor mainly processes wireless communication, for example, a baseband processor. It may be understood that, alternatively, the modem processor may not be integrated into the processor 1010.

The processor 1010 is configured to: input target information into an artificial intelligence (AI) model, to obtain an output result, where the target information includes information about a camped cell of the terminal and information about a neighbor cell of the terminal, and the output result includes information about the terminal to be reselected to the neighbor cell; and
determine, based on the output result, whether to be reselected to the neighbor cell.

Optionally, the information about the camped cell includes at least one of the following:
a normal direction of an antenna of a first network device;
load information of the first network device; and
a radio signal measurement result for the first network device, where the first network device is a network device corresponding to the camped cell.

Optionally, the information about the neighbor cell includes at least one of the following:
a cell identifier of a second network device;
a service type supported by the second network device;
radio resource information supported by the second network device;
a slice type supported by the second network device;
a normal direction of an antenna of the second network device;
load information of the second network device;
a radio signal measurement result for the second network device; and
historical information generated by the second network device in a process of serving the terminal, where
the second network device is a network device corresponding to the neighbor cell.

Optionally, the target information further includes information about the terminal, and the information about the terminal includes at least one of the following:
state information of the terminal;
a service requirement type prediction parameter of the terminal; and
a historical service cell identifier list of the terminal.

Optionally, the state information of the terminal includes at least one of the following:
location information of the terminal; and
mobility information of the terminal.

Optionally, the radio signal measurement result for the first network device includes at least one of the following:
reference signal receiving power (RSRP) of a reference signal of the first network device; and
reference signal receiving quality (RSRQ) of the reference signal of the first network device.

Optionally, the radio signal measurement result for the second network device includes at least one of the following:
RSRP of a reference signal of the second network device; and
RSRQ of the reference signal of the second network device.

Optionally, the historical information includes at least one of the following:
a historical switching report of the terminal on the second network device;
a historical radio link failure report of the terminal on the second network device;
a random access report of the terminal on the second network device; and
a historical service state of the terminal on the second network device.

Optionally, the load information includes at least one of the following:
a physical resource block (PRB) utilization rate;
the number of radio resource control (RRC) connections;
the number of stored sessions of an inactive terminal; and
time stamp information.

Optionally, the radio resource information supported by the second network device includes at least one of the following:
a bandwidth supported by the second network device;
whether the second network device supports carrier aggregation;
a carrier aggregation combination supported by the second network device;
whether the second network device supports dual connectivity; and
a dual connectivity combination supported by the second network device.

Optionally, the AI model is determined based on first AI model information, and the first AI model information is used to indicate at least one of the following:
an AI model identifier;
AI model state information;
an activation condition for the AI model;
operation cycle information for the AI model;
a validity period of the AI model;
a valid area for the AI model;
a time-frequency resource for requesting the AI model;
AI model structure information;
AI model parameter information;
AI model data processing manner information;
first description information related to an AI model input parameter, where the first description information includes a default-able identifier of each input parameter;
a default value for the AI model input parameter; and
second description information related to an AI model output parameter.

Optionally, the activation condition for the AI model includes at least one of the following that:
reference signal receiving power (RSRP) of a reference signal of a first network device is less than or equal to a first threshold; and
RSRP of a reference signal of a second network device is greater than or equal to a second threshold.

Optionally, the operation cycle information for the AI model includes at least one of the following:
an operation cycle in which the terminal operates the AI model;
a first parameter related to a radio signal measurement value of the terminal, where the first parameter is used to determine the operation cycle of the AI model; and
a second parameter related to a moving speed of the terminal, where the second parameter is used to determine the operation cycle of the AI model.

Optionally, the output result includes indication information, and the indication information is used to indicate whether to be reselected to the neighbor cell.

Optionally, the output result further includes at least one of the following:
a confidence coefficient for being reselected to the neighbor cell;
a time for being reselected to the neighbor cell; and
a cell identifier of the neighbor cell.

Optionally, in a case that the confidence coefficient is greater than a confidence threshold, the output result is: being reselected to the neighbor cell.

Optionally, the first AI model information is carried in a last message received before the terminal enters an inactive state or an idle state, or the first AI model information is carried in a message received in a case that the terminal is in the inactive state or the idle state.

Optionally, in a case of determining, based on the validity period of the AI model, that the AI model is invalid, the processor 1010 is configured to perform one of the following operations:
receiving second AI model information through broadcasting;
obtaining the second AI model information through a random access request; and
performing cell reselection in a preset manner.

Optionally, the radio frequency unit 1001 is configured to: in a case of being determined to be reselected to the neighbor cell, initiate a random access request to the neighbor cell, where
the random access request carries a random access report, and the random access report includes at least one of the following:
a cell reselection type identifier;
an AI model input parameter and a parameter value for the AI model input parameter;
an AI model identifier;
a default list of the AI model input parameter; and
a default value list of default values for the AI model input parameter.

The terminal 1000 provided in the foregoing embodiment can implement processes implemented in the method embodiment of FIG. 2, and a same technical effect is achieved. To avoid repetition, details are not described herein again.

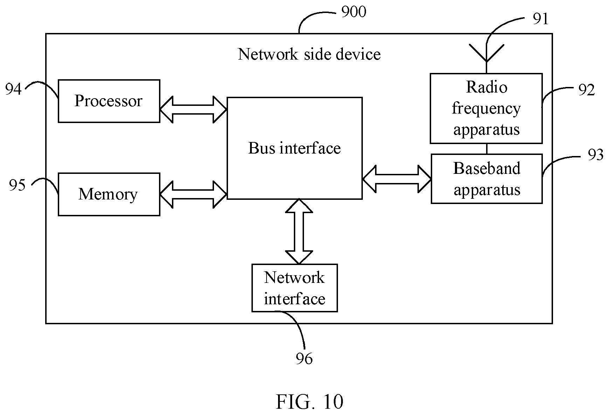

Specifically, an embodiment of this application further provides a network side device. As shown in FIG. 10, a network side device 900 includes an antenna 91, a radio frequency apparatus 92, and a baseband apparatus 93. The antenna 91 is connected to the radio frequency apparatus 92. In an uplink direction, the radio frequency apparatus 92 receives information by using the antenna 91, and sends the received information to the baseband apparatus 93 for processing. In a downlink direction, the baseband apparatus 93 processes information that needs to be sent, and sends processed information to the radio frequency apparatus 92. The radio frequency apparatus 92 processes the received information, and sends processed information by using the antenna 91.

The frequency band processing apparatus may be located in the baseband apparatus 93. The method performed by the network side device in the foregoing embodiment may be implemented in the baseband apparatus 93. The baseband apparatus 93 includes a processor 94 and a memory 95.

The baseband apparatus 93 may include, for example, at least one baseband board, where a plurality of chips are disposed on the baseband board. As shown in FIG. 9, one chip is, for example, the processor 94, which is connected to the memory 95, so as to invoke a program in the memory 95 to perform operations of the network device shown in the foregoing method embodiment.

The baseband apparatus 93 may further include a network interface 96, configured to exchange information with the radio frequency apparatus 92. For example, the interface is a common public radio interface (common public radio interface, CPRI for short).

Specifically, the network side device in this embodiment of the present invention further includes an instruction or a program stored in the memory 95 and executable on the processor 94. The processor 94 invokes the instruction or the program in the memory 95 to perform the method performed by the modules shown in FIG. 6 or FIG. 7, and a same technical effect is achieved. To avoid repetition, details are not described herein again.

An embodiment of this application further provides a readable storage medium. A program or an instruction is stored in the readable storage medium. When the program or the instruction is executed by a processor, each process of the method embodiment in FIG. 2, FIG. 3, or FIG. 4 can be implemented, and a same technical effect can be achieved. To avoid repetition, details are not described herein again.

The processor is a processor in the terminal or the network side device in the foregoing embodiment. The readable storage medium includes a computer-readable storage medium, such as a computer read-only memory (Read-Only Memory, ROM), a random access memory (Random Access Memory, RAM), a magnetic disk, or an optical disc.

An embodiment of this application further provides a chip. The chip includes a processor and a communications interface. The communications interface is coupled to the processor, the processor is configured to run a program or an instruction of a network side device, to implement the processes of the foregoing method embodiment shown in FIG. 2, FIG. 3, or FIG. 4, and a same technical effect can be achieved. To avoid repetition, details are not described herein again.

It should be understood that the chip mentioned in this embodiment of this application may also be referred to as a system-level chip, a system chip, a chip system, or a system on chip.

It should be noted that, in this specification, the term "include", "comprise", or any other variant thereof is intended to cover a non-exclusive inclusion, so that a process, a method, an article, or an apparatus that includes a list of elements not only includes those elements but also includes other elements which are not expressly listed, or further includes elements inherent to this process, method, article, or apparatus. In absence of more constraints, an element preceded by "includes a..." does not preclude the existence of other identical elements in the process, method, article, or apparatus that includes the element. In addition, it should be noted that the scope of the methods and apparatuses in the embodiments of this application is not limited to performing functions in the order shown or discussed, but may also include performing the functions in a basically simultaneous manner or in opposite order based on the functions involved. For example, the described methods may be performed in a different order from the described order, and various steps may be added, omitted, or combined. In addition, features described with reference to some examples may be combined in other examples.

Based on the descriptions of the foregoing implementations, a person skilled in the art may clearly understand that the method in the foregoing embodiment may be implemented by software in addition to a necessary universal hardware platform or by hardware only. In most circumstances, the former is a preferred implementation. Based on such an understanding, the technical solutions of this application essentially, or the part contributing to the prior art may be implemented in a form of a software product. The computer software product is stored in a storage medium (for example, a ROM/RAM, a magnetic disk, or a compact disc), and includes several instructions for instructing a terminal (which may be a mobile phone, a computer, a server, an air conditioner, a network, or the like) to perform the method described in the embodiments of this application.

The embodiments of this application are described above with reference to the accompanying drawings, but this application is not limited to the foregoing specific implementations, and the foregoing specific implementations are only illustrative and not restrictive. Under the enlightenment of this application, a person of ordinary skill in the art can make many forms without departing from the purpose of this application and the protection scope of the claims, all of which fall within the protection of this application.

## Claims

1. A cell reselection method, comprising:
inputting, by a terminal, target information into an artificial intelligence, AI, model, to obtain an output result, wherein the target information comprises information about a camped cell of the terminal and information about a neighbor cell of the terminal, and the output result comprises information about the terminal to be reselected to the neighbor cell; and
determining, by the terminal based on the output result, whether to be reselected to the neighbor cell.

2. The method according to claim 1, wherein the information about the camped cell comprises at least one of the following:
a normal direction of an antenna of a first network device;
load information of the first network device; and
a radio signal measurement result for the first network device, wherein the first network device is a network device corresponding to the camped cell.

3. The method according to claim 1, wherein the information about the neighbor cell comprises at least one of the following:
a cell identifier of a second network device;
a service type supported by the second network device;
radio resource information supported by the second network device;
a slice type supported by the second network device;
a normal direction of an antenna of the second network device;
load information of the second network device;
a radio signal measurement result for the second network device; and
historical information generated by the second network device in a process of serving the terminal, wherein
the second network device is a network device corresponding to the neighbor cell.

4. The method according to claim 1, wherein the target information further comprises information about the terminal, and the information about the terminal comprises at least one of the following:
state information of the terminal;
a service requirement type prediction parameter of the terminal; and
a historical service cell identifier list of the terminal.

5. The method according to claim 4, wherein the state information of the terminal comprises at least one of the following:
location information of the terminal; and
mobility information of the terminal.

6. The method according to claim 2, wherein the radio signal measurement result for the first network device comprises at least one of the following:
reference signal receiving power, RSRP, of a reference signal of the first network device; and
reference signal receiving quality, RSRQ, of the reference signal of the first network device.

7. The method according to claim 3, wherein the radio signal measurement result of the second network device comprises at least one of the following:
RSRP of a reference signal of the second network device; and
RSRQ of the reference signal of the second network device.

8. The method according to claim 3, wherein the historical information comprises at least one of the following:
a historical switching report of the terminal on the second network device;
a historical radio link failure report of the terminal on the second network device;
a random access report of the terminal on the second network device; and
a historical service state of the terminal on the second network device.

9. The method according to claim 2 or 3, wherein the load information comprises at least one of the following:
a physical resource block, PRB, utilization rate;
the number of radio resource control, RRC, connections;
the number of stored sessions of an inactive terminal; and
time stamp information.

10. The method according to claim 3, wherein the radio resource information supported by the second network device comprises at least one of the following:
a bandwidth supported by the second network device;
whether the second network device supports carrier aggregation;
a carrier aggregation combination supported by the second network device;
whether the second network device supports dual connectivity; and
a dual connectivity combination supported by the second network device.

11. The method according to claim 1, wherein the AI model is determined based on first AI model information, and the first AI model information is used to indicate at least one of the following:
an AI model identifier;
AI model state information;
an activation condition for the AI model;
operation cycle information for the AI model;
a validity period of the AI model;
a valid area for the AI model;
a time-frequency resource for requesting the AI model;
AI model structure information;
AI model parameter information;
AI model data processing manner information;
first description information related to an AI model input parameter, wherein the first description information comprises a default-able identifier of each input parameter;
a default value for the AI model input parameter; and
second description information related to an AI model output parameter.

12. The method according to claim 11, wherein the activation condition for the AI model comprises at least one of the following that:
reference signal receiving power, RSRP, of a reference signal of a first network device is less than or equal to a first threshold; and
RSRP of a reference signal of a second network device is greater than or equal to a second threshold.

13. The method according to claim 11, wherein the operation cycle information for the AI model comprises at least one of the following:
an operation cycle in which the terminal operates the AI model;
a first parameter related to a radio signal measurement value of the terminal, wherein the first parameter is used to determine the operation cycle of the AI model; and
a second parameter related to a moving speed of the terminal, wherein the second parameter is used to determine the operation cycle of the AI model.

14. The method according to claim 1, wherein the output result comprises indication information, and the indication information is used to indicate whether to be reselected to the neighbor cell.

15. The method according to claim 14, wherein the output result further comprises at least one of the following:
a confidence coefficient for being reselected to the neighbor cell;
a time for being reselected to the neighbor cell; and
a cell identifier of the neighbor cell.

16. The method according to claim 15, wherein in a case that the confidence coefficient is greater than a confidence threshold, the output result is: being reselected to the neighbor cell.

17. The method according to claim 11, wherein the first AI model information is carried in a last message received before the terminal enters an inactive state or an idle state, or the first AI model information is carried in a message received in a case that the terminal is in the inactive state or the idle state.

18. The method according to claim 10, wherein the method further comprises: in a case that the AI model is determined to be invalid based on the validity period of the AI model, performing, by the terminal, one of the following operations:
receiving second AI model information through broadcasting;
obtaining the second AI model information through a random access request; and
performing cell reselection in a preset manner.

19. The method according to claim 1, further comprising:
in a case that the terminal determines to be reselected to the neighbor cell, initiating, by the terminal, a random access request to the neighbor cell, wherein
the random access request carries a random access report, and the random access report comprises at least one of the following:
a cell reselection type identifier;
an AI model input parameter and a parameter value for the AI model input parameter;
an AI model identifier;
a default list of the AI model input parameter; and
a default value list of default values for the AI model input parameter.

20. A cell reselection method, comprising:
sending, by a first network device, first artificial intelligence, AI, model information, wherein the first AI model information is information about an AI model used for cell reselection.

21. The method according to claim 20, wherein the first AI model information is used to indicate at least one of the following:
an AI model identifier;
AI model state information;
an activation condition for the AI model;
operation cycle information for the AI model;
a validity period of the AI model;
a valid area for the AI model;
a time-frequency resource for requesting the AI model;
AI model structure information;
AI model parameter information;
AI model data processing manner information;
first description information related to an AI model input parameter, wherein the first description information comprises a default-able identifier of each input parameter;
a default value for the AI model input parameter; and
second description information related to an AI model output parameter.

22. The method according to claim 21, wherein the activation condition for the AI model comprises at least one of the following that:
reference signal receiving power, RSRP, of a reference signal of a first network device is less than or equal to a first threshold; and
RSRP of a reference signal of a second network device is greater than or equal to a second threshold.

23. The method according to claim 21, wherein the operation cycle information for the AI model comprises at least one of the following:
an operation cycle in which the terminal operates the AI model;
a first parameter related to a radio signal measurement value of the terminal, wherein the first parameter is used to determine the operation cycle of the AI model; and
a second parameter related to a moving speed of the terminal, wherein the second parameter is used to determine the operation cycle of the AI model.

24. The method according to claim 20, wherein the first AI model information is carried in a last message sent by the first network device before the terminal enters an inactive state or an idle state, or the first AI model information is carried in a broadcast message that is sent by the first network device and that is received in a case that the terminal is in the inactive state or the idle state.

25. The method according to claim 20, further comprising:
sending, by the first network device, load information to the terminal.

26. The method according to claim 25, wherein the load information comprises at least one of the following:
a physical resource block, PRB, utilization rate;
the number of radio resource control, RRC, connections;
the number of stored sessions of an inactive terminal; and
time stamp information.

27. A cell reselection method, comprising:
sending, by a second network device, information about a neighbor cell for cell reselection, wherein the information about the neighbor cell comprises at least one of the following:
a cell identifier of the second network device;
a service type supported by the second network device;
radio resource information supported by the second network device;
a slice type supported by the second network device;
a normal direction of an antenna of the second network device;
load information of the second network device;
a radio signal measurement result for the second network device; and
historical information generated by the second network device in a process of serving the terminal, wherein
the second network device is a network device corresponding to the neighbor cell.

28. The method according to claim 27, wherein the load information comprises at least one of the following:
a physical resource block, PRB, utilization rate;
the number of radio resource control, RRC, connections;
the number of stored sessions of an inactive terminal; and
time stamp information.

29. The method according to claim 27, wherein the radio resource information supported by the second network device comprises at least one of the following:
a bandwidth supported by the second network device;
whether the second network device supports carrier aggregation;
a carrier aggregation combination supported by the second network device;
whether the second network device supports dual connectivity; and
a dual connectivity combination supported by the second network device.

30. A cell reselection apparatus, comprising:
an obtaining module, configured to input target information into an artificial intelligence , AI, model, to obtain an output result, wherein the target information comprises information about a camped cell of the terminal and information about a neighbor cell of the terminal, and the output result comprises information about the terminal to be reselected to the neighbor cell; and
a determining module, configured to determine, based on the output result, whether to be reselected to the neighbor cell.

31. The apparatus according to claim 30, wherein the information about the camped cell comprises at least one of the following:
a normal direction of an antenna of a first network device;
load information of the first network device; and
a radio signal measurement result for the first network device, wherein the first network device is a network device corresponding to the camped cell.

32. The apparatus according to claim 30, wherein the information about the neighbor cell comprises at least one of the following:
a cell identifier of a second network device;
a service type supported by the second network device;
radio resource information supported by the second network device;
a slice type supported by the second network device;
a normal direction of an antenna of the second network device;
load information of the second network device;
a radio signal measurement result for the second network device; and
historical information generated by the second network device in a process of serving the terminal, wherein
the second network device is a network device corresponding to the neighbor cell.

33. A cell reselection apparatus, comprising:
a sending module, configured to send first artificial intelligence, AI, model information, wherein the first AI model information is information about an AI model used for cell reselection.

34. The apparatus according to claim 33, wherein the first AI model information is used to indicate at least one of the following:
an AI model identifier;
AI model state information;
an activation condition for the AI model;
operation cycle information for the AI model;
a validity period of the AI model;
a valid area for the AI model;
a time-frequency resource for requesting the AI model;
AI model structure information;
AI model parameter information;
AI model data processing manner information;
first description information related to an AI model input parameter, wherein the first description information comprises a default-able identifier of each input parameter;
a default value for the AI model input parameter; and
second description information related to an AI model output parameter.

35. A cell reselection apparatus, comprising:
a sending module, configured to send information about a neighbor cell for cell reselection, wherein the information about the neighbor cell comprises at least one of the following:
a cell identifier of the second network device;
a service type supported by the second network device;
radio resource information supported by the second network device;
a slice type supported by the second network device;
a normal direction of an antenna of the second network device;
load information of the second network device;
a radio signal measurement result for the second network device; and
historical information generated by the second network device in a process of serving the terminal, wherein
the second network device is a network device corresponding to the neighbor cell.

36. A terminal, comprising a processor, a memory, and a program or an instruction stored in the memory and executable on the processor, wherein when the program or the instruction is executed by the processor, steps of the cell reselection method according to any one of claims 1 to 19 are implemented.

37. A network device, comprising a processor, a memory, and a program or an instruction stored in the memory and executable on the processor, wherein when the program or the instruction is executed by the processor, steps of the cell reselection method according to any one of claims 20 to 29 are implemented.

38. A readable storage medium, wherein the readable storage medium stores a program or an instruction, and when the program or the instruction is executed by a processor, steps of the cell reselection method according to any one of claims 1 to 19 are implemented, or when the program or the instruction is executed by a processor, steps of the cell reselection method according to any one of claims 20 to 29 are implemented.
